# EUROPEAN PATENT SPECIFICATION

(11) **EP 0 543 655 B1**
(45) Date of publication and mention of the grant of the patent: **10.05.1995**
(21) Application number: 92310605.8
(22) Date of filing: 20.11.1992
(51) Int. Cl.: A01K 63/06, H05B 3/80

(54) **Immersible heater**
Immersionsheizer
Elément chauffant immersible

(30) Priority: 21.05.1992 GB 9210882; 21.11.1991 GB 9124704
(43) Date of publication of application: 26.05.1993
(73) Proprietor: LAWRENCE PLC, New Malden Surrey KT3 4Q5 (GB)
(72) Inventor: Birt, Leslie Arthur, Newport Pagnell, Bucks MK 160JN (GB)
(74) Representative: Godsill, John Kenneth

(56) References cited:
- DE-A- 2 927 280
- DE-A- 2 927 280
- GB-A- 2 074 825
- GB-A- 2 163 328
- US-A- 3 746 836
- US-A- 4 124 793
- US-A- 4 379 220
- US-A- 4 631 626

## Description

The present invention relates to an immersible heater for use in heating a medium, for example water.

More specifically, this invention relates to a heater for use in an aquarium.

Known aquarium heaters comprise a glass tube within which is located a heating element incorporating a thermostat, which is normally of the bi-metallic type. There may or may not be a barrier between the heater and the thermostat to make the thermostat more responsive to the surrounding water temperature.

A known aquarium heater comprises a heating element wound around a ceramic or glass former, the element being located within a glass tube having walls less than 2mm thick. The heater is thermostatically controlled by a bi-metallic strip contained within a section of the tube adjacent that section containing the heater.

A further known aquarium heater comprises a ceramic former holding a spirally wound heating element, encased together with a thermostat within a glass tube having 2 mm thick walls.

In such conventional heaters, the temperature of the casing can reach 300°C when they are removed from the water. This compares to acceptable shock loads of 180-200°C for borosilicote glass and 250°C for pyrex. Conventional heaters may also fail to satisfy safety requirements with regard to mechanical strength, i.e. failure to break under the impact of a special hammer exerting 0.2 or 0.5Nm.

There is also disclosed in DE-A-2927280, a heater for heating a medium in which the heater is immersed, the heater comprising an electric heating element mounted within a casing, thermally conductive but electrically non-conductive particulate material inside the casing, surrounding the element and arranged to conduct heat from the element to the casing, sensor means arranged to sense a temperature representative of the temperature of the casing adjacent the heating element when the heater is removed from the medium and control means arranged to control the heat output of the heater in dependence upon the sensed temperature. In that case, the sensor means was located in the heating element.

According to the present invention, the heater is characterised in that the sensor means is located outside the heating element within the surrounding particulate material.

Preferably the heater is able to satisfy accepted safety standards with respect to mechanical strength and temperature control.

For a better understanding of the present invention and to show how the same may be carried into effect, reference will now be made, by way of example, to the accompanying drawings, in which:
Fig. 1 shows a heater according to one embodiment of the present invention;
Fig. 2 shows a heater according to a second embodiment of the present invention;
Fig. 3 shows an alternative end to the heater; and
Fig. 4 illustrates the power output versus temperature characteristic of the heater of Fig. 2.

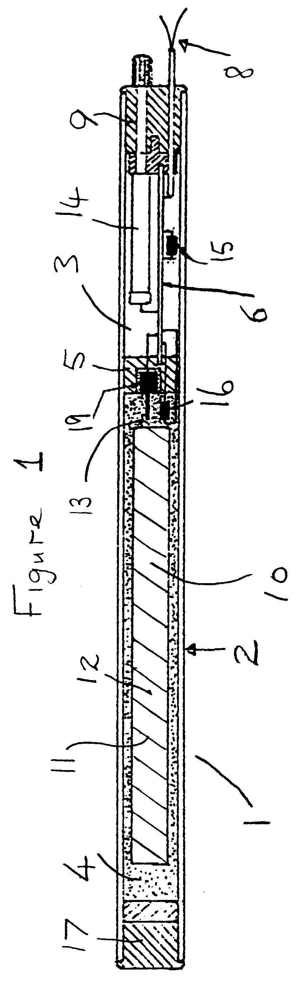

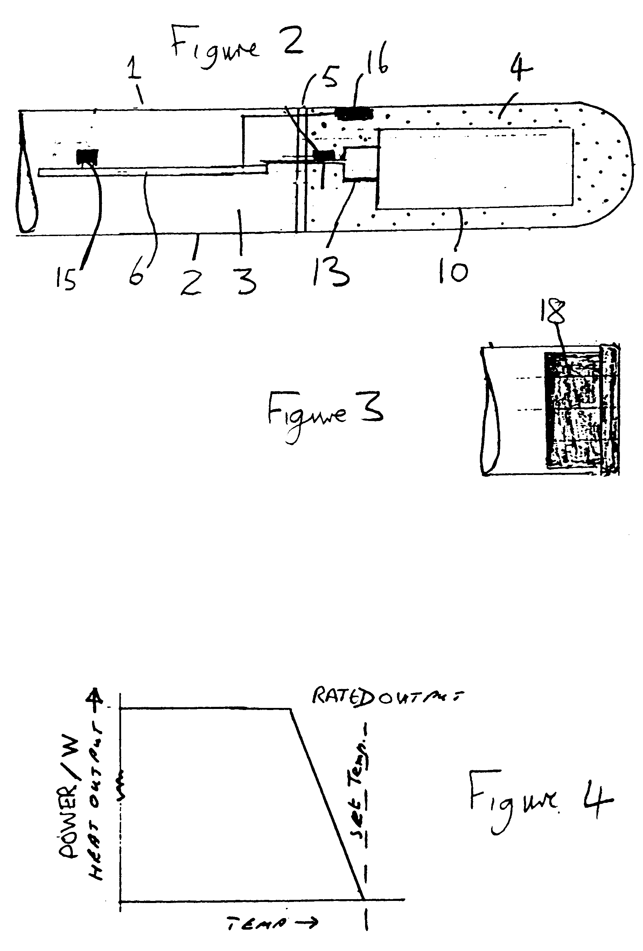

Figures 1 and 2 show two variants of an immersible heater 1 having an outer protective casing 2 which is divided internally into two compartments 3 and 4 by a barrier 5. The barrier may be thermally insulating. A printed circuit board 6, having connected thereto thermistors 15 and 16 or other temperature sensing elements, is located in a first of the compartments with power supply leads 8 being connected between an external power supply and the printed circuit board through a water tight seal 9 arranged in the adjacent end of the casing. Located in the second compartment 4 is a heating element 10 comprising a wire coil 11 around a glass former 12, the former having a spiral groove formed along its surface to accommodate the coil. Alternatively, the former may have a plurality of grooves running parallel to the axis, the grooves being equally spaced around the circumference of the former. The coil is electrically connected through the barrier 5 to the printed circuit board by a pair of leads 13. The space surrounding the heating element 10 in the second compartment 4 is filled with a thermally conductive but electrically insulating particulate material such as sand or Maglox. The barrier 5 prevents the filling material from contaminating the components in the first compartment 3. The end of the casing adjacent the second compartment 4 may be integral with the casing wall (as shown in Fig. 2) or may be formed by a water tight seal 17 (as shown in Figure 1) or by a rubber bung 18 (Figure 3) removably inserted into the end of the casing. The latter constructions make easier the process of filling the second compartment with thermally conductive material.

The printed circuit board 6 provides an electronic control circuit which controls the power supplied to the heating element, in dependence upon the sensed temperatures, in order to maintain the temperature of the medium in which the heater is immersed at the desired temperature. The desired temperature is set by adjusting a potentiometer 14, the control knob for which projects through the seal 9 (see Figure 1).

A circuit suitable for the control of the above heaters is the subject of U.K. patent application No. 9123012.8 but other circuits with the same function may be used with equal effect. To control the heating element 10, there is also in Figure 1 a triac 19 having a heat sink embedded in the particulate material.

The heater elements are normally made in a range of wattages varying between 50W and 300W, the length of element being reasonably proportional to the wattage. A standard frequently adopted is a maximum watt loading of 2W per sq. cm. of glass tube encasing the heating element but this may be exceeded with the present design, i.e. more watts/cm².

Removing the heater from the medium whilst the power supply is connected will result in a rise in the temperature of the heater which, if unchecked, could result in damage to the heater and injury to a person handling it. In addition, re-immersing the heater after allowing it to so heat-up could result in the casing cracking due to the sudden thermal shock. These problems are the subject of new international standard IEC 335-2-55.

A first of the thermistors 15 is located within and toward the centre of the first compartment 3 and is arranged to sense the temperature of the surrounding medium when the heater is operating normally, thus to allow the temperature of the medium to be controlled to a desired, set, temperature. The second thermistor 16 is located within the second compartment, embedded in the Maglox and spaced apart from the casing wall, thus to provide an input for the override control.

An advantage of this two thermistor heater is that whilst the first thermistor 15 can be sufficiently thermally decoupled from the heating element to ensure that its temperature reflects the temperature of the surrounding medium when the heater is in normal use, the second thermostat can be sufficiently thermally coupled to the casing adjacent to the heater to ensure a rapid response of override control in the event that the heater is removed from the medium.

It will be apparent that a rise in the temperature of the casing adjacent to the heater due to withdrawal of the heater from the medium will be transmitted to the thermistor 16. Thus the control circuit is arranged to act upon an excessive temperature sensed by the thermistor 16 to override the normal control operation and to disconnect the power supply from the heater. The threshold temperature is preferably preset during manufacture and may be for example 100°. Alternatively the threshold temperature may be adjustable by means of a second potentiometer accessible to a user.

Hysteresis may be provided in the response of the override control such that the heater will only turn on again when the sensed temperature has fallen below the threshold temperature by a given amount, e.g. by 10°C. Alternatively, a temperature exceeding the threshold temperature may trigger the disconnection of the power supply for a given time, e.g. 10 minutes, after which the power supply is reconnected.

The incorporation of Maglox into the second compartment decreases the response time of the override control as described above. In normal use, the Maglox also eliminates the lateral high temperature convection currents (found in conventional air filled heaters) and improves the radial heat flow by conduction from the heating element to the glass casing. The result is that whilst the heater is immersed the temperature at the site of the second thermistor 16 is maintained at a relatively low value, e.g. not exceeding 60°C. The threshold for triggering the override may be set at 65°C which may for example result in the override operating approximately 100 seconds after removal of the heater from the water. It is also contemplated that if, after the override is triggered, the control thermostat rises above the set temperature then the heater will remain off for a predetermined time, e.g. 1 hour, before repeating a safety cycle.

It will again be appreciated that the precise locations of the thermistors within their respective compartments are not limited to those described above. Instead they are determined by the requirements of the functions which they perform. For example, an advantageous location for the second thermistor 16 is between the former 10 and the casing wall. As a further example, Fig. 1 shows a two thermistor heater in which the first thermistor 15 is located adjacent the wall of the casing.

Fig. 4 shows the power output of an aquarium heater having two thermistors. Spacing the thermistors further from the heating element allows the average temperature of the warmed water to be more accurately controlled and less likely to be affected by local variations around the heater. The heater operates at maximum power output up to a few degrees below the equilibrium temperature, where the use of the electronic controlling means and the spaced thermistor allow the power to fall more controllably in dependence upon variable parameters of the controlling means. Typically, the inclined portion of the graph may begin at 28°C for a preset temperature of 30°C. By increasing the difference between the cut-out and the cut-in temperatures, the slope of the inclined portion of the graph can be made less steep and vice versa.

The following table shows the typical characteristics of a number of heaters each comprising a 200 W rated heater with a 130 mm long former.

| | Maximum temperature of the heating element in normal use/°C | Maximum temperature of the glass tube out of water/°C | The out of water cut-out time for the heater/S |
|---|---|---|---|
| Conventional heater and bimetallic thermostat | 220 | 400 | 300 |
| Maglox filled, sensor placed in the middle of the ancillary compartment | 135 | 300 | 250 |
| Maglox filled single sensor placed in close thermal proximity to the glass tube and the barrier | 135 | 150 | 75 |
| Maglox filled, two sensors | 150 | 180 | 100 |

In the preferred embodiments the power is supplied to the heating coil via triac 19. By the application of a bias voltage, the alternating current through the triac can be controlled. However, where the controlled current is significant, a heat sink is usually required. This reduces the working temperature of the component and prolongs its life. In some instances when a heat sink is not used, the component may heat to well over 100°C. However, conventional heat sinks are not suitable for use within the confines of the present embodiments but it has been found that by placing the triac heat sink in the thermally conductive medium its operating temperature can be reduced significantly, thus giving prolonged component life and more efficient operation.

It is a possibility in some heaters that the heating element may store sufficient heat energy when it is energised that even if the power supply is disconnected the temperature of the casing can rise to an unacceptable level when the heater is removed from the water. Certain embodiments may therefore comprise a heating element with a low thermal heat capacity, such as a spiral wound wire on a Mica or similar light former. Whilst the element itself may typically reach a temperature of 400°C, the thermal heat capacity of the former is low enough that, if taken out of the water whilst the element is at maximum temperature with the power supply disconnected, there is insufficient heat present to heat the glass tube above a maximum safe temperature.

The heat capacity of the heater may be further reduced by arranging the element as close as possible to the inner wall of the casing by using a relatively large former, owing to the heat capacity of the former being less than that of the thermally conducting material.

## Claims

1. A heater for heating a medium in which the heater is immersed, the heater comprising an electric heating element (10) mounted within a casing (2), thermally conductive but electrically non-conductive particulate material inside the casing, surrounding the element and arranged to conduct heat from the element to the casing (2), sensor means (16) arranged to sense a temperature representative of the temperature of the casing adjacent the heating element when the heater is removed from the medium and control means (6) arranged to control the heat output of the heater in dependence upon the sensed temperature, the heater being characterised in that the sensor means is located outside the heating element within the surrounding particulate material.

2. A heater according to claim 1 wherein the control means is arranged to turn off the heater if the sensed temperature exceeds a set temperature.

3. A heater according to claim 1 or 2 wherein the control means (6) comprises a triac having a heat sink embedded in the particulate material.

4. A heater according to claim 1, 2 or 3, wherein the interior of the casing has two compartments separated by a barrier (5), the second of which compartments (3) contains the heating element and the particulate material (10).

5. A heater according to claim 4 wherein the barrier (5) is thermally insulating.

6. A heater according to claim 4 or 5 wherein the control means (6) is located substantially in the first compartment (4).

7. A heater according to claim 4, 5 or 6, wherein the sensor means (16) is located close to the barrier (5).

8. A heater according to any one of the preceding claims comprising sensor means (15) within the casing (2) arranged to sense a temperature representative of the temperature of the medium to be heated when the heater is immersed, the control means (6) being arranged to control the heat output of the heater in dependence upon the sensed temperature representative of the medium.

9. A heater according to claim 8 when appended to any one of claims 4 to 7 wherein the second mentioned sensor means (15) is located in the first compartment (3).

10. A heater according to any one of the preceding claims wherein the first mentioned sensor means is in contact with the casing (2).

11. A heater according to any one of the preceding claims wherein the first mentioned sensor means (16) is located between the heating element 10 and the casing (2).

## Patentansprüche

1. Heizgerät zum Erwärmen eines Mediums, in das das Heizgerät getaucht wird, umfassend
ein elektrisches Heizelement (10), das in einem Gehäuse (2) montiert ist,
ein thermisch leitendes, aber elektrisch nichtleitendes teilchenförmiges Material, das sich im Gehäuse befindet, das Element umgibt und so angeordnet ist, das es Wärme vom Element zum Gehäuse (2) leitet,
eine Fühlereinrichtung (16), die eine Temperatur, die für die Temperatur des Gehäuses nächst des Heizelements steht, erfühlt, wenn das Heizgerät aus dem Medium entfernt wird sowie eine Regeleinrichtung (6), die die Wärmeabgabe des Heizgeräts in Abhängigkeit von der erfaßten Temperatur regelt, wobei das Heizgerät dadurch gekennzeichnet ist, daß die Fühlereinrichtung außenseitig am Heizelement im umgebenden teilchenförmigen Material angeordnet ist.

2. Heizgerät nach Anspruch 1, wobei die Regeleinrichtung ausgelegt ist, das Heizgerät abzuschalten, wenn die erfühlte Temperatur eine bestimmte Temperatur übersteigt.

3. Heizgerät nach Anspruch 1 oder 2, wobei die Regeleinrichtung (6) ein Triac mit einem Wärmeverbraucher aufweist, das im teilchenförmigen Material eingebettet ist.

4. Heizgerät nach Anspruch 1, 2 oder 3, wobei das Innere des Gehäuses durch eine Sperre (5) in zwei Kompartimente unterteilt ist, wobei das zweite Kompartiment (3) das Heizelement und das teilchenfömige Material (10) enthält.

5. Heizgerät nach Anspruch 4, wobei die Sperre (5) thermisch isoliert.

6. Heizgerät nach Anspruch 4 oder 5, wobei die Regeleinrichtung (6) im wesentlichen im ersten Kompartiment (4) angeordnet ist.

7. Heizgerät nach Anspruch 4, 5 oder 6, wobei die Fühlereinrichtung (16) nahe an der Trennwand (5) angeordnet ist.

8. Heizgerät nach einem der vorhergehenden Ansprüche, umfassend eine Fühlereinrichtung (15) im Gehäuse (2), die eine Temperatur, die für die Temperatur des zu erwärmenden Mediums steht, erfühlen kann, wenn das Heizgerät eingetaucht ist, wobei die Regeleinrichtung (6) die Wärmeabgabe des Heizgeräts abhängig von der erfühlten Temperatur für das Medium regeln kann.

9. Heizgerät nach Anspruch 8, wenn abhängig von einem der Ansprüche 4 bis 7, wobei die zweitgenannten Fühlereinrichtung (15) im ersten Kompartiment (3) angeordnet ist.

10. Heizgerät nach einem der vorhergehenden Ansprüche, wobei die erstgenannte Fühlereinrichtung in Kontakt mit dem Gehäuse (2) steht.

11. Heizgerät nach einem der vorhergehenden Ansprüche, wobei die erstgenannte Fühlereinrichtung (16) zwischen dem Heizelement (10) und dem Gehäuse (2) angeordnet ist.

## Revendications

1. Dispositif de chauffage pour chauffer un fluide dans lequel le dispositif de chauffage est immergé, le dispositif de chauffage comprenant un élément chauffant électrique (10) monté à l'intérieur d'une enveloppe (2), un matériau en particules thermiquement conducteur, mais électriquement non conducteur, situé à l'intérieur de l'enveloppe en entourant l'élément et disposé de façon à véhiculer la chaleur de l'élément vers l'enveloppe (2), un moyen de détection (16) conçu pour détecter une température représentative de la température de l'enveloppe au voisinage immédiat de l'élément chauffant quand le dispositif de chauffage est retiré du fluide, et un moyen de commande (6) conçu pour commander la puissance calorifique utile du dispositif de chauffage en fonction de la température détectée, le dispositif de chauffage étant caractérisé en ce que le moyen de détection est placé à l'extérieur de l'élément chauffant, au sein du matériau en particules qui l'entoure.

2. Dispositif de chauffage selon la revendication 1, dans lequel le moyen de commande est conçu pour couper le dispositif de chauffage si la température détectée dépasse une température de consigne.

3. Dispositif de chauffage selon la revendication 1 ou 2, dans lequel le moyen de commande (6) comprend un triac comportant un puits de chaleur enfoui dans le matériau en particules.

4. Dispositif de chauffage selon la revendication 1, 2 ou 3, dans lequel l'espace intérieur de l'enveloppe comporte deux compartiments séparés par une barrière (5), le second de ces compartiments (3) contenant l'élément chauffant et le matériau en particules (10).

5. Dispositif de chauffage selon la revendication 4, dans lequel la barrière (5) est thermiquement isolante.

6. Dispositif de chauffage selon la revendication 4 ou 5, dans lequel le moyen de commande (6) est essentiellement placé dans le premier compartiment (4).

7. Dispositif de chauffage selon la revendication 4, 5 ou 6, dans lequel le moyen de détection (16) est positionné près de la barrière (5).

8. Dispositif de chauffage selon l'une quelconque des revendications précédentes, comprenant un moyen de détection (15) situé à l'intérieur de l'enveloppe (2) et conçu pour détecter une température représentative de la température du fluide appelé à être chauffé quand le dispositif de chauffage est immergé, le moyen de commande (6) étant conçu pour commander la puissance calorifique utile du dispositif de chauffage en fonction de la température détectée représentative du fluide.

9. Dispositif de chauffage selon la revendication 8, quand elle est dépendante de l'une quelconque des revendications 4 à 7, dans lequel le moyen de détection (15), mentionné en second, est placé dans le premier compartiment (3).

10. Dispositif de chauffage selon l'une quelconque des revendications précédentes, dans lequel le moyen de détection, mentionné en premier, est en contact avec l'enveloppe (2).

11. Dispositif de chauffage selon l'une quelconque des revendications précédentes, dans lequel le moyen de détection (16), mentionné en premier, est placé entre l'élément chauffant (10) et l'enveloppe (2).
